# EUROPEAN PATENT SPECIFICATION

(11) **EP 3 779 544 B1**
(45) Date of publication and mention of the grant of the patent: **28.08.2024**
(21) Application number: 19792667.8
(22) Date of filing: 25.04.2019
(51) Int. Cl.: G02B 6/44

(54) **OPTICAL FIBER DISTRIBUTION FRAME CABINET**
SCHRANK FÜR GLASFASERVERTEILRAHMEN
ARMOIRE DE RÉPARTITEURS DE FIBRE OPTIQUE

(30) Priority: 28.04.2018 CN 201810403711
(43) Date of publication of application: 17.02.2021
(73) Proprietor: HUAWEI TECHNOLOGIES CO., LTD., Shenzhen, Guangdong 518129 (CN)
(72) Inventor: SHU, Siwen, Shenzhen, Guangdong 518129 (CN); XIONG, Wei, Shenzhen, Guangdong 518129 (CN); ZHANG, Jinjin, Shenzhen, Guangdong 518129 (CN)
(74) Representative: Thun, Clemens
(86) International application number: PCT/CN2019/084215
(87) International publication number: WO 2019/206210

(56) References cited:
- CN-A- 1 799 296
- CN-A- 106 338 801
- CN-U- 202 110 318
- CN-U- 202 421 580
- CN-U- 203 117 456
- CN-U- 204 496 073
- CN-U- 207 123 634
- JP-A- 2012 226 257
- US-A- 5 100 221
- US-A- 5 402 515
- US-A1- 2016 195 688
- US-A1- 2017 293 099
- US-B1- 6 263 141

## Description

### TECHNICAL FIELD

This application relates to the field of fiber-optic communications, and in particular, to an optical distribution frame.

### BACKGROUND

In the communications field, an optical fiber is an indispensable carrier for an optical communications transmission network channel, and an optical distribution frame (optical distribution frame, ODF) is an indispensable device for a terminal and a regeneration site in a fiber-optic communications network to implement fiber coiling, fiber jumping, and access functions.

In an optical communications network of a power system, during operations such as reconstruction of aged devices, large-scale technical improvements, scheduled maintenance, and emergency fault handling, an ODF is repeatedly opened to perform fiber jumping and the like. Because the ODF is excessively heavy and forms a cantilever beam structure, local downward inclination occurs at a far end of the ODF during rotation of the ODF, and it is difficult to effectively avoid occurrence of local downward inclination. Therefore, it is difficult to install the ODF into an ODF cabinet. Efficiency of operating the ODF is reduced, and fiber-optic communication is easily affected.
The document US 5,100,221 A shows an optical fiber cable distribution frame and support.
The document US 5,402,515 A shows a fiber distribution frame system and according cabinets, trays and connector couplings.
The document US 2017/293099 A1 shows a multi-positional telecommunications tray including means for guiding fibers.
The document US 6,263,141 B1 shows an optical fiber cable management device including a storage tray.

### SUMMARY

The present invention is defined by the independent claims. Further advantageous developments are shown by the dependent claims.

The present invention provides an optical distribution frame cabinet that can improve efficiency of installing an optical distribution frame into an optical distribution frame cabinet.

A first aspect of embodiments of the present invention provides an optical distribution frame cabinet, including a cabinet, where a plurality of optical distribution frames are installed in the cabinet. A first end of at least one of the optical distribution frames is configured to be hinged to the cabinet. A sliding groove is disposed on an end face of a second end of the at least one of the optical distribution frames. The sliding groove extends in a longitudinal direction of the at least one of the optical distribution frames. A mounting ear component is disposed on an end face of the cabinet. The mounting ear component is convexly disposed facing the at least one of the optical distribution frames. When the mounting ear component is inserted into the sliding groove, the mounting ear component is configured to slide in a guide direction of the sliding groove, the optical distribution frame moving, while the mounting ear is fastened to the optical distribution frame cabinet, until the at least one of the optical distribution frames is inserted into the cabinet. The optical distribution frame can rotate into the optical distribution frame cabinet; or the optical distribution frame can rotate out of the optical distribution frame cabinet, so that a user can operate the optical distribution frame that rotates out of the optical distribution frame cabinet.

To avoid a phenomenon of local downward inclination in a process of installing the optical distribution frame into the optical distribution frame cabinet, a sliding groove is concavely disposed on an end face of a second end of the optical distribution frame, and the sliding groove extends in a longitudinal direction of the optical distribution frame; a mounting ear component is disposed on an end face of the cabinet, and the mounting ear component is convexly disposed facing the optical distribution frame; and when the mounting ear component is inserted into the sliding groove, the mounting ear component slides in a guide direction of the sliding groove until the optical distribution frame is installed into the cabinet.

It can be learned that, when the user finishes operating the optical distribution frame and needs to install the optical distribution frame into the optical distribution frame cabinet, the mounting ear component is located at an end of the sliding groove away from a cabinet door of the cabinet, and when the user exerts pushing force on the optical distribution frame, the mounting ear component can slide in the guide direction of the sliding groove, so as to avoid occurrence of local downward inclination during the installation.

Specifically, a first notch and a second notch are oppositely disposed at two ends of the sliding groove. The first notch is disposed near the cabinet door of the cabinet, the second notch is disposed away from the cabinet door of the cabinet, and a cross-sectional area of the second notch is greater than that of the first notch.

An advantage of using a structure of the sliding groove in this aspect is that: In a process in which the optical distribution frame rotates to be installed into the cabinet, when the mounting ear component is just inserted into the second notch, because an opening of the second notch is relatively large, that is, a gap is formed between the mounting ear component and the second notch when the mounting ear component is inserted into the second notch, the mounting ear component is quite easily inserted into the second notch. In this way, mounting of the mounting ear component to the optical distribution frame is easily implemented.

Based on the first aspect of the embodiments of the present invention, a cutting plane of the sliding groove is broadening in a longitudinal direction of the optical distribution frame, and a first notch and a second notch are oppositely disposed at two ends of the broadening sliding groove; the first notch is disposed near the cabinet door of the cabinet, the second notch is disposed away from the cabinet door of the cabinet, and a cross-sectional area of the second notch is greater than that of the first notch; and when the mounting ear component is inserted into the second notch, as described in this embodiment, a gap is formed between the mounting ear component and the second notch.

It can be learned that, in the process in which the optical distribution frame rotates to be installed into the cabinet, when the mounting ear component is just inserted into the second notch, because an opening of the second notch is relatively large, that is, the gap is formed between the mounting ear component and the second notch when the mounting ear component is inserted into the second notch, the mounting ear component is quite easily inserted into the second notch. In this way, mounting of the mounting ear component to the optical distribution frame is easily implemented. To implement the installation of the optical distribution frame, the user needs to exert pushing force on the optical distribution frame. In a pushing process, in a process in which the mounting ear component slides inside the sliding groove in the guide direction of the sliding groove, because the sliding groove has an inclined surface, the mounting ear component gradually adjusts a position of the mounting ear component in a height direction. When the mounting ear component slides into the first notch, the optical distribution frame is installed into the cabinet. In this way, a phenomenon of local downward inclination is effectively avoided in the process of installing the optical distribution frame.

Based on the first aspect of the embodiments of the present invention, in an optional implementation, a fastening slot is concavely disposed at the bottom of the sliding groove, and the bottom of the sliding groove is disposed facing the cabinet door of the cabinet, so that the mounting ear component slides in a guide direction of the sliding groove. When the mounting ear component is inserted into and fastened to the fastening slot, the mounting ear component is in interference fit with the fastening slot.

Based on the foregoing description, the mounting ear component can be inserted into and fastened to the bottom of the sliding groove, thereby improving structure firmness between the mounting ear component and the bottom of the groove.

Based on the first aspect of the embodiments of the present invention, in an optional implementation, the optical distribution frame includes a fastening part and a rotating part that are connected to each other, where a first side of the fastening part is fixedly connected to the cabinet, a rotating groove is concavely disposed on a second side of the fastening part, a rotating shaft is convexly disposed on the rotating part, and the rotating shaft is inserted into and fastened to the rotating groove, so that the rotating part rotates around the fastening part with the rotating shaft as a center.

Based on the first aspect of the embodiments of the present invention, in an optional implementation, the rotating part is integrally disposed, and the rotating part includes a tray body configured to fasten a plurality of target units, where the target unit is a fiber storage unit configured to store an optical fiber entering or exiting the optical distribution frame; or the target unit is a splicing unit configured to splice an optical cable entering the optical distribution frame and an optical fiber located inside the optical distribution frame; or the target unit is an optical splitting unit configured to perform optical splitting on the optical fiber.

Based on the first aspect of the embodiments of the present invention, in an optional implementation, the tray body that is integrally disposed and the plurality of target units are all made of a macromolecular material.

Specifically, in this embodiment, in a process of fabricating the rotating part, a mold used to fabricate the rotating part may be obtained in advance, and a macromolecular material is placed inside the mold used to fabricate the rotating part, so that the mold can be pressed and formed to integrally form the rotating part. The rotating part is integrally formed by using the macromolecular material, and the macromolecular material is a material based on a macromolecular compound. The macromolecular material is a material formed by compounds with relatively high relative molecular mass, and includes rubber, plastics, fibers, a coating, an adhesive, and a macromolecular matrix composite material. The macromolecular material is relatively light. Therefore, an overall weight of the rotating part is reduced, so as to further avoid occurrence of local downward inclination in the process of installing the rotating part and improve efficiency of installing the rotating part.

Based on the first aspect of the embodiments of the present invention, in an optional implementation, the rotating part further includes a mounting bracket, where an accommodation groove is formed between a first end face of the mounting bracket and the tray body; the accommodation groove is configured to insert and fasten the optical splitting unit; at least one mounting notch is disposed on a second end face of the mounting bracket; and the mounting notch is configured to insert and fasten an end face of the splicing unit, so that the splicing unit is inserted into and fastened to the second end face of the mounting bracket.

Based on the first aspect of the embodiments of the present invention, in an optional implementation, at least one limiting hook is disposed at a position, facing the first end face of the mounting bracket, on the tray body, and the limiting hook extends in a first direction; at least one limiting slot is disposed on the first end face of the mounting bracket, and the limiting slot and the limiting hook are disposed opposite to each other; the limiting hook is configured to insert and fasten the limiting slot, and the limiting hook is configured to limit movement of the limiting slot in a second direction; and the second direction is a direction opposite to the longitudinal direction of the optical distribution frame.

Based on the first aspect of the embodiments of the present invention, in an optional implementation, a connecting part is disposed on the mounting ear component, a first threaded hole extends through the connecting part, a second threaded hole is disposed in the cabinet, and the first threaded hole and the second threaded hole are disposed opposite to each other; a sliding arm extends from the connecting part in a direction facing the sliding groove, and extends out of the opening of the sliding groove; and a guide rail is concavely disposed in the guide direction of the sliding groove, and shapes of the sliding arm and the guide rail match each other, so that when the sliding arm is inserted into the guide rail, the sliding arm slides in a guide direction of the guide rail.

Based on the first aspect of the embodiments of the present invention, in an optional implementation, a connecting part is disposed on the mounting ear component, a first threaded hole extends through the connecting part, a second threaded hole is disposed in the cabinet, and the first threaded hole and the second threaded hole are disposed opposite to each other; and
a sliding arm extends from the connecting part in a direction facing the sliding groove, and extends out of the opening of the sliding groove; and a guide rail is concavely disposed in the guide direction of the sliding groove, and shapes of the sliding arm and the guide rail match each other, so that when the sliding arm is inserted into the guide rail, the sliding arm slides in a guide direction of the guide rail.

According to the optical distribution frame cabinet in this embodiment, the first end of the optical distribution frame is hinged to the cabinet; the sliding groove is concavely disposed on the end face of the second end of the optical distribution frame; the mounting ear component is disposed on the end face of the cabinet; the mounting ear component is convexly disposed in the direction facing the optical distribution frame; and when the mounting ear component is inserted into the sliding groove, the mounting ear component slides in the guide direction of the sliding groove until the optical distribution frame is installed into the cabinet. According to the optical distribution frame in this embodiment, the sliding groove having an inclined surface feature is disposed to cooperate with the mounting ear component of the optical distribution frame cabinet, thereby effectively avoiding a phenomenon of local downward inclination in the process of installing the optical distribution frame, and improving efficiency of installing the optical distribution frame.

### BRIEF DESCRIPTION OF DRAWINGS

FIG. 1 is a schematic structural diagram of an embodiment of an optical fiber cable network according to the present invention;
FIG. 2 is a schematic structural diagram of an embodiment of an optical distribution frame cabinet according to the present invention;
FIG. 3 is a schematic structural diagram of an embodiment of an optical distribution frame according to the present invention;
FIG. 4 is a schematic structural diagram of another embodiment of an optical distribution frame according to the present invention;
FIG. 5 is a schematic diagram of a local structure of an embodiment of an optical distribution frame according to the present invention;
FIG. 6 is a schematic structural diagram of another embodiment of an optical distribution frame according to the present invention;
FIG. 7 is a schematic structural diagram of an embodiment of a mounting bracket according to the present invention;
FIG. 8 is a schematic structural diagram of another embodiment of a mounting bracket according to the present invention;
FIG. 9 is a schematic diagram of a local structure of another embodiment of an optical distribution frame according to the present invention;
FIG. 10 is a schematic diagram of a local structure of another embodiment of an optical distribution frame according to the present invention;
FIG. 11 is a schematic diagram of a local structure of another embodiment of an optical distribution frame according to the present invention; and
FIG. 12 is a schematic diagram of a local structure of another embodiment of an optical distribution frame according to the present invention.

### DESCRIPTION OF EMBODIMENTS

To better understand an ODF cabinet provided in the embodiments of the present invention, the following first uses an example to describe a structure of an optical fiber cable network to which the ODF cabinet is applied.

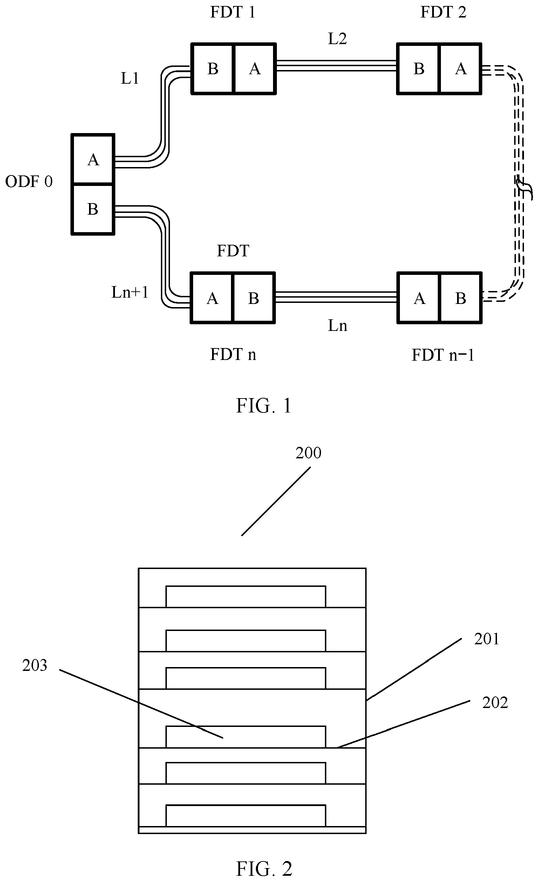

The optical fiber cable network may include at least two node devices, and the node device is, for example, an optical distribution frame ODF or a fiber distribution terminal FDT. For example, an optical fiber cable network shown in FIG. 1 includes one ODF and n FDTs (n is positive integer less than or equal to 8). These node devices are connected in series by using an optical cable to form a ring-type optical fiber cable network. An optical cable between two node devices is referred to as an optical cable section, and the node devices provide space for termination, splicing, and pass-through of optical fibers in the optical cable section. For example, a shared fiber may be terminated in each node device, whereas an exclusive fiber may be terminated in only one intermediate node device (FDT), and other optical fibers in the optical cable section, except a shared optical fiber, may be spliced and pass through in an intermediate node device.

Usually, each optical cable section includes an end A and an end B, where one end is terminated, spliced, or straight-through in a node device, the other end is terminated, spliced, or straight-through in an adjacent node device, and the ODF may be used as a start end and a tail end of the entire optical cable, that is, all optical cables are terminated in the ODF. Specifically, assuming that the end A of the optical cable section (an end A of an entire optical cable) is terminated in the ODF, the end B of the optical cable section is definitely terminated in an adjacent node device, for example, terminated in an FDT. By analogy, an end A of the last section of optical cable is terminated in an n^{th} FDT, or an end B of the last section of optical cable is definitely terminated in the ODF after splicing of the last section of optical cable.

It should be understood that this embodiment of the present invention is described by only using a ring-type optical fiber cable network as an example; however, this embodiment of the present invention is not limited thereto. For example, the optical fiber cable network applied in the embodiments of the present invention may be a chain-type optical fiber cable network, may be a tree-type optical fiber cable network, or may be an optical fiber cable network with another network topology.

As shown in FIG. 2, an embodiment of the present invention provides an optical distribution frame cabinet 200. Currently, the optical distribution frame cabinet 200 is a main device in a communications distribution device and is specially designed for a fiber-optic communications equipment room. The optical distribution frame cabinet 200 has functions of optical cable fastening and protection, optical cable termination, cables patching, and optical cable core and pigtail protection.

Specifically, the optical distribution frame cabinet 200 may be separately accommodate the ODF, or may be installed into a cabinet together with a digital distribution unit and an audio distribution unit to form a combined distribution frame. The optical distribution frame cabinet 200 is flexible in configuration, simple to install and use, and easy to maintain and manage, and is an indispensable device for a terminal and a regeneration site in a fiber-optic communications network to implement fiber coiling, fiber jumping, optical cable splicing, and access.

The following details a specific structure of the optical distribution frame cabinet 200 in this embodiment.

The optical distribution frame cabinet 200 includes a cabinet 201. A plurality of subracks 202 are disposed inside the cabinet 201, and each subrack 202 is configured to install an ODF 203.

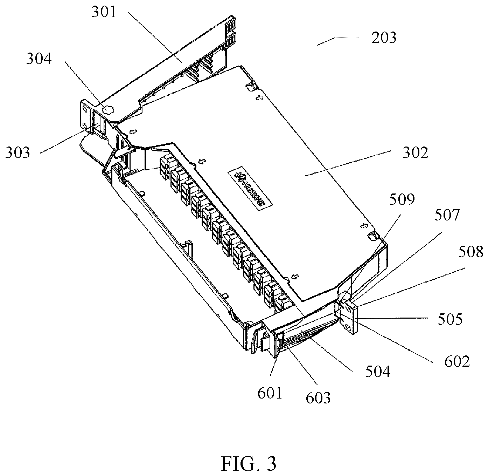

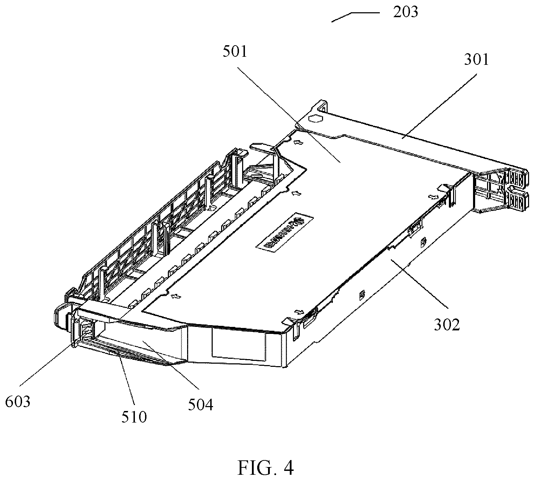

For an overall structure of the ODF 203, refer to FIG. 3 and FIG. 4. In this embodiment, illustrative description is provided by using an example in which the overall structure of the ODF 203 is cuboid. In another embodiment, the overall structure of the ODF 203 may also assume another structure, and this is not specifically limited in this embodiment.

Optionally, the ODF 203 in this embodiment includes a fastening part 301 and a rotating part 302 that are connected to each other.

A first side of the fastening part 301 is fixedly connected to the cabinet 201. A specific connection manner between the fastening part 301 and the cabinet 201 is not limited in this embodiment. For example, the fastening part 301 and the cabinet 201 may be connected by using a technique such as riveting or welding.

Optionally, for example, the specific connection manner between the fastening part 301 and the cabinet 201 in this embodiment is shown in FIG. 3. A rotating groove 303 is concavely disposed on a second side of the fastening part 301, a rotating shaft 304 is convexly disposed on the rotating part 302, and the rotating shaft 304 is inserted into and fastened to the rotating groove 303, so that the rotating part 302 can rotate around the fastening part 301 with the rotating shaft 304 as a center.

It can be learned that, when an included angle between the fastening part 301 and the rotating part 302 is 0 degrees, the ODF 203 is inserted into the cabinet 201; and when the included angle between the fastening part 301 and the rotating part 302 is approximately 90 degrees, the rotating part 302 rotates to an outside of the cabinet 201, so that a user may perform functions of optical cable fastening and protection, optical cable termination, cables patching, and the like on the rotating part 302. It can be learned that, the rotating part 302 of the ODF 203 in this embodiment can rotate out of the cabinet 201 at any time as required.

The optical distribution frame cabinet 200 in this embodiment can effectively avoid occurrence of local downward inclination in the ODF 203 to be installed. To better understand how the optical distribution frame cabinet 200 specifically avoids the occurrence of local downward inclination in the ODF 203 to be installed, the following first uses an example to describe a phenomenon of local downward inclination.

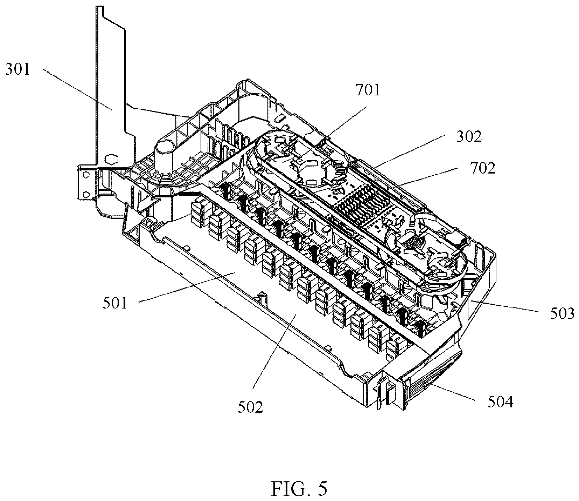

Illustrative description is further provided with reference to FIG. 5. The rotating part 302 in this embodiment includes a tray body 501 and an upper cover 502. When the upper cover 502 covers the tray body 501, the upper cover 502 and the tray body 501 are combined to form the rotating part 302. FIG. 5 is a schematic diagram of an internal structure of the tray body 501.

As shown in FIG. 5, in a process in which the rotating part 302 rotates around the fastening part 301, if the rotating part 302 is in a horizontal state, an end face 503 of the rotating part 302 away from the fastening part 301 may be fixedly installed in an installation position inside the cabinet 201, that is, in a lateral direction of the optical distribution frame cabinet 200, the installation position to insert and fasten the end face 503 is disposed inside the optical distribution frame cabinet 200.

However, because the ODF 203 has a considerable self-weight, the rotating part 302 cannot stay in a horizontal state in the process in which the rotating part 302 rotates around the fastening part 301. In this case, the end face 503 of the rotating part 302 cannot be inserted into and fastened to the installation position parallel to the end face 503. As a result, the ODF 203 cannot be inserted into and fastened to the optical distribution frame cabinet 200. This is referred to as local downward inclination.

In the optical distribution frame cabinet 200 in this embodiment, to avoid occurrence of local downward inclination in a process of installing the ODF 203, a sliding groove 504 is concavely disposed on an end face of a second end of the ODF 203 in this embodiment, that is, the sliding groove 504 is concavely disposed on the end face of the rotating part 302 away from the fastening part 301 in this embodiment. Specifically, the sliding groove 504 extends in a longitudinal direction of the ODF 203.

A mounting ear component 505 is disposed on an end face of the cabinet 201. A connection manner between the cabinet 201 and the mounting ear component 505 is not limited in this embodiment, provided that the mounting ear component 505 and the cabinet 201 are fixedly connected. For example, the cabinet 201 and the mounting ear component 505 may be connected by using a screw.

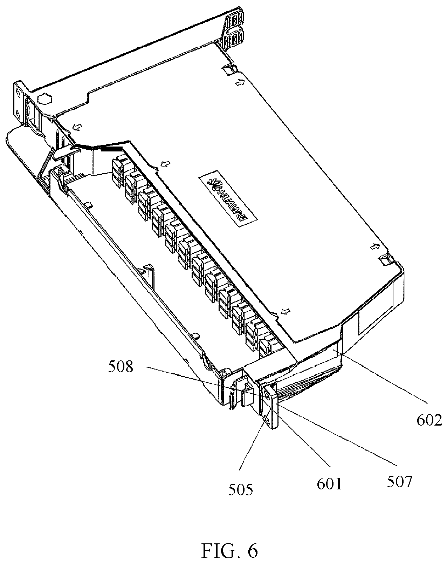

Specifically, FIG. 3 and FIG. 6 are used as examples. A connecting part 507 is disposed on the mounting ear component 505, a first threaded hole 508 extends through the connecting part 507, a second threaded hole is disposed in the cabinet, and the first threaded hole 508 and the second threaded hole are disposed opposite to each other, so that when a screw sequentially passes through the first threaded hole 508 and the second threaded hole, that is, when the screw is sequentially screwed into the first threaded hole 508 and the second threaded hole, the mounting ear component 505 is fastened to the cabinet 201.

Specifically, the mounting ear component 505 fixedly disposed on the end face of the cabinet 201 is convexly disposed facing the ODF 203; and when the mounting ear component 505 is inserted into the sliding groove 504, the mounting ear component 505 slides in a guide direction of the sliding groove 504 until the ODF 203 is installed into the cabinet.

Specifically, in the process of installing the ODF 203 in the cabinet, as shown in FIG. 3, the mounting ear component 505 is first inserted at an end of the sliding groove 504 away from a cabinet door. In a process in which a user pushes the ODF 203 to an inner side of the cabinet 201, the mounting ear component 505 slides inside the sliding groove 504 along an end of the sliding groove 504 close to the cabinet door. As shown in FIG. 6, in a sliding process, because the mounting ear component 505 has functions of holding and fastening the ODF 203, the ODF 203 is kept in a horizontal state in the process of installing the ODF 203 in the cabinet, thereby effectively avoiding local downward inclination in the process of installing the ODF 203.

To further avoid occurrence of local downward inclination in the process of installing the ODF 203, a size of an opening of the sliding groove 504 gradually increases in a direction away from the cabinet door of the cabinet, that is, the size of the opening of the sliding groove 504 gradually increases as a distance between the opening and the cabinet door of the cabinet increases.

With reference to FIG. 3 and FIG. 6, in this embodiment, a cutting plane of the sliding groove 504 is broadening in the longitudinal direction of the ODF 203, and a first notch 601 and a second notch 602 are oppositely disposed at two ends of the broadening sliding groove 504.

The first notch 601 is disposed near the cabinet door of the cabinet. The second notch 602 is disposed away from the cabinet door of the cabinet, and a cross-sectional area of the second notch 601 is greater than that of the first notch 602.

An advantage of using the broadening sliding groove 504 is that: In a process in which the ODF 203 rotates to be installed into the cabinet, when the mounting ear component 505 is just inserted into the second notch 602, because an opening of the second notch 602 is relatively large, as shown in FIG. 3, the mounting ear component 505 is quite easily inserted into the second notch 602. In this way, mounting of the mounting ear component 505 to the ODF 203 is easily implemented. To implement the installation of the ODF 203, the user needs to exert pushing force on the ODF 203. In a pushing process, in a process in which the mounting ear component 505 slides inside the sliding groove 504 in the guide direction of the sliding groove 504, because the sliding groove 504 has an inclined surface, the mounting ear component 505 gradually adjusts a position of the mounting ear component 505 in a height direction. When the mounting ear component 505 slides into the first notch 602, the ODF 203 is installed into the cabinet. In this way, a phenomenon of local downward inclination is effectively avoided in the process of installing the ODF 203, so that in the process of installing the ODF 203, the optical distribution frame in this embodiment can implement installation without local downward inclination and improve efficiency of installing the ODF 203.

Optionally, to enable the mounting ear component 505 to slide in the guide direction of the sliding groove 504, as shown in FIG. 3, a sliding arm 509 extends from the connecting part 507 in a direction facing the sliding groove 504 in this embodiment. Still referring to FIG. 4, the sliding arm 509 extends out of the opening of the sliding groove; and a guide rail 510 is concavely disposed in the guide direction of the sliding groove 504, and shapes of the sliding arm 509 and the guide rail 510 match each other, so that when the sliding arm 509 is inserted into the guide rail 510, the sliding arm 509 slides in a guide direction of the guide rail 510.

When the mounting ear component 505 slides to an end portion of the sliding groove 504 close to the cabinet door, as shown in FIG. 3 and FIG. 4, a fastening slot 603 is concavely disposed at the bottom of the sliding groove 504, and the bottom of the sliding groove 504 is disposed facing the cabinet door of the cabinet. In this way, as shown in FIG. 6, the mounting ear component 505 slides in the guide direction of the sliding groove 504, and when the mounting ear component 505 is inserted into and fastened to the fastening slot 603, the mounting ear component 505 is in interference fit with the fastening slot 603.

A specific shape of the fastening slot 603 is not limited in this embodiment, provided that the mounting ear component 505 is in interference fit with the fastening slot 603 when the mounting ear component 505 is inserted into the fastening slot 603.

To further prevent occurrence of local downward inclination in the process of installing the ODF 203, an overall weight of the ODF 203 may be further reduced in this embodiment. When the overall weight of the ODF 203 is reduced, occurrence of local downward inclination in a process of installing the ODF 203 may be further reduced. To further reduce the overall weight of the ODF 203, the rotating part 302 included in the ODF 203 in this embodiment may be integrally disposed.

Specifically, in this embodiment, in the process of fabricating the rotating part 302, a mold used to fabricate the rotating part 302 may be obtained in advance, and a macromolecular material is placed inside the mold used to fabricate the rotating part 302, so that the mold can be pressed and formed to integrally form the rotating part 302. The rotating part 302 in this embodiment is integrally formed by using the macromolecular material, and the macromolecular material (macromolecular material) is a material based on a macromolecular compound. The macromolecular material is a material formed by compounds with relatively high relative molecular mass, including rubber, plastics, fibers, a coating, an adhesive, and a macromolecular matrix composite material. The macromolecular material is relatively light. Therefore, the overall weight of the ODF 203 is reduced, so as to further avoid occurrence of local downward inclination in the process of installing the ODF 203 and improve efficiency of installing the ODF 203.

Specifically, the following optionally describes an internal structure of the integrally formed rotating part 302. It should be noted that, the internal structure of the rotating part 302 varies with a function implemented by the ODF 203 in this embodiment. Therefore, an internal structure of the rotating part 302 for implementing different functions is not limited in this embodiment.

As shown in FIG. 5, a plurality of target units are fixedly installed on the tray body 501 included in the rotating part 302 in this embodiment. Different target units are fixedly disposed on the tray body 501, so that the ODF 203 implements different functions.

Optionally, the target unit in this embodiment may be a fiber storage unit configured to store an optical fiber entering or exiting the ODF 203. A specific position and a specific shape of the fiber storage unit located on the tray body 501 are not limited in this embodiment, provided that the fiber storage unit is disposed on the tray body 501 and the ODF 203 has an optical fiber storage function.

Optionally, using FIG. 5 as an example, the target unit in this embodiment may be a splicing unit 701 configured to splice an optical cable entering the ODF 203 and an optical fiber located inside the ODF 203, and the splicing unit 701 implements a reliable connection between the optical cable and the optical fiber.

Optionally, FIG. 5 is used as an example. The target unit may alternatively be an optical splitting unit 702 configured to perform optical splitting on the optical fiber.

It should be noted that, the description of the components included in the tray body 501 in this embodiment is an optional example, and no limitation is set thereto. For example, an adapter unit may be alternatively disposed on the tray body 501, and the adapter unit is configured to implement a connection between an optical cable and an optical fiber, to implement connectivity of an optical path. For another example, a guide pin may be alternatively disposed on the tray body 501. When closing of rotation of the ODF 203 needs to be tightly fastened by using a screw or a hook, while the screw or the hook may not be precisely aligned in a rotation process, the guide pin located on the tray body 501 is needed for guiding to facilitate precise alignment of the screw or hook. For another example, a distribution unit may be alternatively disposed on the tray body 501, and the distribution unit is inserted into an adapter unit to implement a distribution function.

It should be noted that a quantity of components included in the tray body 501 and functions implemented by the components are not limited in this embodiment, provided that the tray body 501 and the components disposed thereon are integrally disposed.

A specific manner in which the optical splitting unit 702 and the splicing unit 701 are disposed on the tray body 501 in this embodiment is described below by using an example.

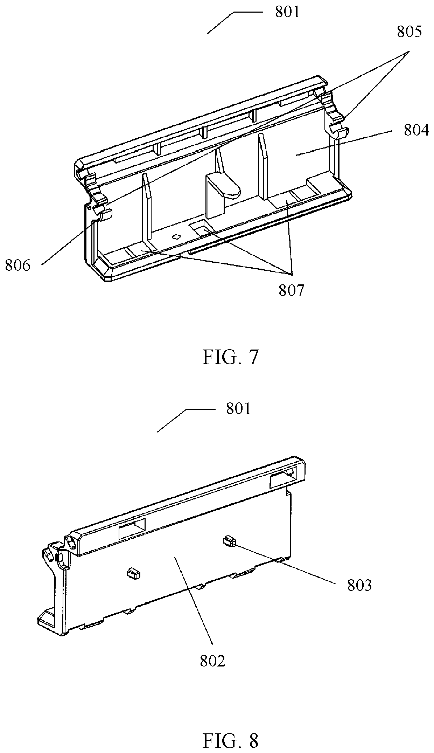

Specifically, as shown in FIG. 7 and FIG. 8, the rotating part 302 in this embodiment further includes a mounting bracket 801. FIG. 7 and FIG. 8 are schematic diagrams of an overall structure of the mounting bracket 801.

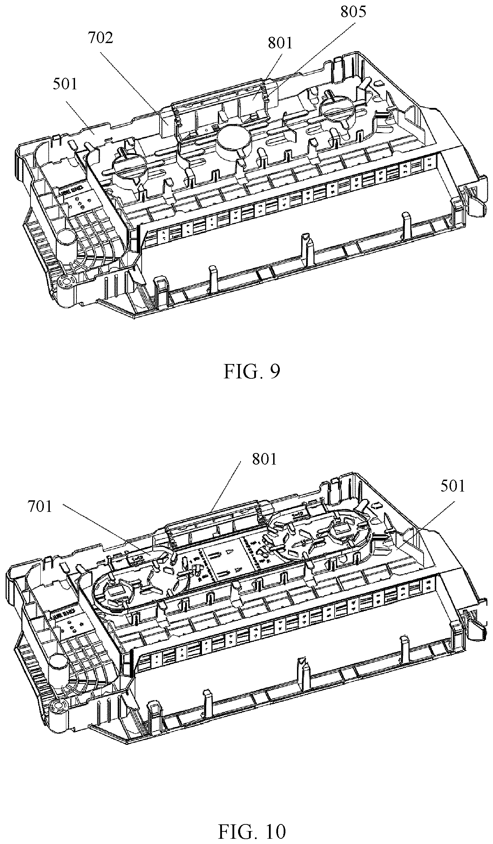

More specifically, as shown in FIG. 9, an accommodation groove is formed between a first end face 802 of the mounting bracket 801 and the tray body 501, and the accommodation groove is configured to insert and fasten the optical splitting unit 702. It can be learned that, the accommodation groove for accommodating the optical splitting unit 702 in this embodiment is located between the first end face 802 of the mounting bracket 801 and the tray body 501.

Optionally, a plurality of bumps 803 may be convexly disposed on the first end face 802 of the mounting bracket 801 in this embodiment, and a cavity is disposed in the optical splitting unit 702. In a process of installing the optical splitting unit, the bump 803 may be inserted into the cavity of the optical splitting unit 702, so as to install the optical splitting unit 702 in the accommodation groove.

With reference to FIG. 7 and FIG. 9, at least one mounting notch 805 is disposed on a second end face 804 of the mounting bracket 801. Specifically, the second end face 804 of the mounting bracket 801 may extend to form an extension arm 806; the extension arm 806 extends in a direction away from the second end face 804 of the mounting bracket 801; and the mounting notch 805 is disposed on an end face of the extension arm 806. As shown in FIG. 9, when the mounting bracket 801 is installed and fastened to the tray body 501, an opening of the mounting notch 805 is exposed. In this case, as shown in FIG. 10, when the splicing unit 701 needs to be installed, the splicing unit 701 may be fastened to the tray body 501, and an end face of the splicing unit 701 may be inserted into and fastened to the mounting notch 805, so that the splicing unit 701 is inserted into and fastened to the second end face of the mounting bracket 801.

The following describes a manner in which the mounting bracket 801 is fixedly installed on the tray body 501.

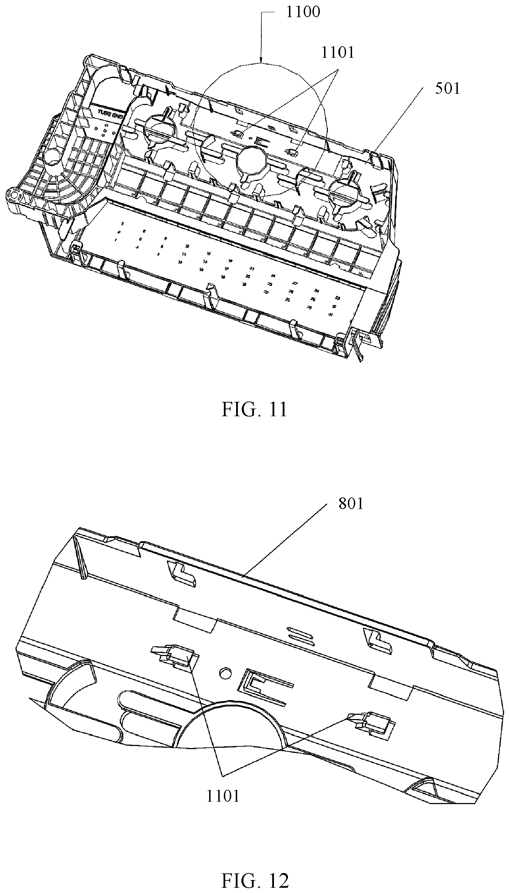

Referring to FIG. 7, FIG. 11, and FIG. 12, FIG. 11 is a schematic structural diagram when no mounting bracket 801 is disposed on the tray body 501, and FIG. 12 is a schematic diagram of a local structure of the mounting bracket 801. Specifically, FIG. 12 is an enlarged schematic structural diagram of an area 1100 shown in FIG. 11.

It can be learned that, in this embodiment, at least one limiting hook 1101 is disposed at a position, facing the first end face 802 of the mounting bracket 801, on the tray body 501, and the limiting hook 1101 extends in a first direction; at least one limiting slot 807 is disposed on the first end face 802 of the mounting bracket 801, and the limiting slot 807 and the limiting hook 1101 are opposite to each other; the limiting hook is configured to insert and fasten the limiting slot 807, and the limiting hook 1101 is configured to limit movement of the limiting slot 807 in a second direction; and the second direction is a direction opposite to the longitudinal direction of the optical distribution frame.

Using FIG. 12 as an example, the first direction in which the limiting hook 1101 in this embodiment is disposed is the right. In this case, when the limiting hook 1101 is inserted into and fastened to the limiting slot 807, because of a fastening function of the limiting hook 1101, the limiting hook 1101 can effectively limit movement of the limiting slot 807 towards the left side, so that the limiting hook 1101 stably fastens the limiting slot 807.

The structure in this embodiment can effectively prevent the mounting bracket 801 from falling back to the second direction, thereby effectively improving structure firmness between the tray body 501 and the mounting bracket 801.

The following describes beneficial effects of the optical distribution frame cabinet in this embodiment.

In the optical distribution frame cabinet in this embodiment, the optical distribution frame installed in the optical distribution frame cabinet is integrally disposed, and the optical distribution frame is made of a macromolecular material. Therefore, a weight of the optical distribution frame is greatly reduced compared with that in the prior art while costs of producing the optical distribution frame are reduced. This is convenient for a user to take out the optical distribution frame from the optical distribution frame cabinet and install the optical distribution frame, thereby improving efficiency of operating the optical distribution frame. In addition, in a process of installing the optical distribution frame with a greatly reduced weight, a phenomenon of local downward inclination can be effectively avoided. Moreover, the optical distribution frame that is integrally disposed can improve structure firmness between various components included in the optical distribution frame, so as to improve stability of an overall structure of the optical distribution frame, and prolong a service life of the optical distribution frame.

In addition, according to the optical distribution frame in this embodiment, the sliding groove having an inclined surface feature is disposed to cooperate with the mounting ear component of the optical distribution frame cabinet, thereby effectively avoiding local downward inclination in the process of installing the optical distribution frame, and improving efficiency of installing the optical distribution frame.

## Claims

1. An optical distribution frame cabinet (200), comprising a cabinet (201), wherein a plurality of optical distribution frames (203) are disposed inside the cabinet (201);
wherein for each of the plurality of optical distribution frames (203):
a first end of the optical distribution frame (203) is configured to be hinged to the cabinet (201) so that the optical distribution frame (203) can rotate into or out of the cabinet (201), and
a sliding groove (504) is disposed on an end face of a second end of the optical distribution frame (203);
the sliding groove (504) extends in a longitudinal direction of the optical distribution frame (203);
a mounting ear component (505) is disposed on an end face of the cabinet (201) and fastened to the cabinet (201), and
the mounting ear component (505) is convexly disposed facing the optical distribution frame (203) when the optical distribution frame (203) is rotated out of the cabinet (201); and
when the optical distribution frame (203) rotates into the cabinet (201), the mounting ear component (505) is inserted into the sliding groove (504) and slides in a guide direction of the sliding groove (504), until the optical distribution frame is inserted into the cabinet (201),
**characterized in that**
a size of an opening of the sliding groove (504) gradually increases in a direction away from a cabinet door of the cabinet (201)
a cutting plane of the sliding groove (504) is broadening in a longitudinal direction of the optical distribution frame, and a first notch (601) and a second notch (602) are oppositely disposed at two ends of the broadening sliding groove (504); the first notch (601) is disposed near the cabinet door of the cabinet (201), the second notch (602) is disposed away from the cabinet door of the cabinet (201), and a cross-sectional area of the second notch (602) is greater than that of the first notch (601); and when the mounting ear component (505) is inserted into the second notch (602), a gap is formed between the mounting ear component (505) and the second notch (602).

2. The optical distribution frame cabinet (200) according to claim 1, wherein a fastening slot (603) is concavely disposed at the bottom of the sliding groove (504), and the bottom of the sliding groove (504) is disposed facing the cabinet door of the cabinet (201), so that the mounting ear component (505) slides in a guide direction of the sliding groove (504) when the optical distribution frame (203) rotates into the cabinet (201), and when the mounting ear component (505) is inserted into and fastened to the fastening slot (603), the mounting ear component (505) is in interference fit with the fastening slot (603).

3. The optical distribution frame cabinet (200) according to any one of claims 1 or 2, wherein the optical distribution frame (203) comprises a fastening part (301) and a rotating part (302) that are connected to each other, wherein a first side of the fastening part (301) is fixedly connected to the cabinet (201), a rotating groove (303) is concavely disposed on a second side of the fastening part (301), a rotating shaft (304) is convexly disposed on the rotating part (302), and the rotating shaft (304) is configured to be inserted into and fastened to the rotating groove (303), so that the rotating part (302) is configured rotates around the fastening part (301) with the rotating shaft (304) as a center.

4. The optical distribution frame cabinet (200) according to claim 3, wherein the rotating part (302) is integrally disposed, and the rotating part (302) comprises a tray body (501) configured to fasten a plurality of target units (701, 702), wherein
at least one of the target units (701, 702) is a fiber storage unit configured to store an optical fiber entering or exiting the at least one of the optical distribution frames; or
at least one of the target units (701, 702) is a splicing unit (701) configured to splice an optical cable entering the optical distribution frame (203) and an optical fiber located inside the optical distribution frame (203); or
at least one of the target units (701, 702) is an optical splitting unit (702) configured to perform optical splitting on the optical fiber

5. The optical distribution frame cabinet (200) according to claim 4, wherein the tray body (501) that is integrally disposed and the plurality of target units (701, 702) are all made of a macromolecular material.

6. The optical distribution frame cabinet (200) according to claim 4 or 5, wherein the rotating part (302) further comprises a mounting bracket (801), wherein an accommodation groove is formed between a first end face of the mounting bracket (801) and the tray body (501); the accommodation groove is configured to insert and fasten the optical splitting unit (702); at least one mounting notch (805) is disposed on a second end face of the mounting bracket (801); and the mounting notch (805) is configured to insert and fasten an end face of the splicing unit (701), so that the splicing unit (701) is inserted into and fastened to the second end face of the mounting bracket (801).

7. The optical distribution frame cabinet (200) according to claim 6, wherein at least one limiting hook (1101) is disposed at a position, facing the first end face of the mounting bracket (801), on the tray body (501), and the limiting hook (1101) extends in a first direction; and at least one limiting slot (807) is disposed on the first end face of the mounting bracket (801), and the limiting slot (807) and the limiting hook (1101) are disposed opposite to each other; the limiting hook (1101) is configured to insert and fasten the limiting slot (807), the limiting hook (1101) is configured to limit movement of the limiting slot (807) in a second direction; and the second direction is a direction opposite to the longitudinal direction of the optical distribution frames (203).

8. The optical distribution frame cabinet (200) according to any one of claims 1 to 7, wherein a connecting part (507) is disposed on the mounting ear component (505), a first threaded hole (508) extends through the connecting part (507), a second threaded hole is disposed in the cabinet (201), and the first threaded hole (508) and the second threaded hole are disposed opposite to each other;
a sliding arm (509) extends from the connecting part (507) in a direction facing the sliding groove (504) when the optical distribution frame (203) rotates into the cabinet (201), and extends out of the opening of the sliding groove (504); and a guide rail (510) is concavely disposed in the guide direction of the sliding groove (504), and shapes of the sliding arm (509) and the guide rail (510) match each other, so that when the sliding arm (509) is inserted into the guide rail (510), the sliding arm (509) slides in a guide direction of the guide rail (510).

## Patentansprüche

1. Schrank (200) für optische Verteilerrahmen, umfassend einen Schrank (201), wobei eine Vielzahl von optischen Verteilerrahmen (203) im Inneren des Schranks (201) angeordnet ist;
wobei für jeden der Vielzahl von optischen Verteilerrahmen (203) :
ein erstes Ende des optischen Verteilerrahmens (203) dazu konfiguriert ist, in dem Schrank (201) derart eingehängt zu werden, dass sich der optische Verteilerrahmen (203) in den Schrank (201) hinein oder aus ihm heraus drehen kann, und
eine Gleitnut (504) an einer Endfläche eines zweiten Endes des optischen Verteilerrahmens (203) angeordnet ist;
sich die Gleitnut (504) in einer Längsrichtung des optischen Verteilerrahmens (203) erstreckt;
ein Montageösen-Bauteil (505) an einer Endfläche des Schranks (201) angeordnet ist und an dem Schrank (201) befestigt ist und das Montageösen-Bauteil (505) konvex angeordnet ist und dem optischen Verteilerrahmen (203) zugewandt ist, wenn der optische Verteilerrahmen (203) aus dem Schrank (201) heraus gedreht ist; und
wenn sich der optische Verteilerrahmen (203) in den Schrank (201) hinein dreht, das Montageösen-Bauteil (505) in die Gleitnut (504) eingeführt wird und in einer Führungsrichtung der Gleitnut (504) gleitet, bis der optische Verteilerrahmen in den Schrank (201) eingeführt ist,
**dadurch gekennzeichnet, dass**
eine Größe einer Öffnung der Gleitnut (504) in einer Richtung weg von einer Schranktür des Schranks (201) allmählich zunimmt, eine Schnittebene der Gleitnut (504) sich in einer Längsrichtung des optischen Verteilerrahmens verbreitert und eine erste Kerbe (601) und eine zweite Kerbe (602) gegenüberliegend an zwei Enden der sich verbreiternden Gleitnut (504) angeordnet sind; die erste Kerbe (601) in der Nähe der Schranktür des Schranks (201) angeordnet ist, die zweite Kerbe (602) von der Schranktür des Schranks (201) entfernt angeordnet ist und eine Querschnittsfläche der zweiten Kerbe (602) größer ist als die der ersten Kerbe (601); und, wenn das Montageösen-Bauteil (505) in die zweite Kerbe (602) einführt ist, ein Spalt zwischen dem Montageösen-Bauteil (505) und der zweiten Kerbe (602) gebildet ist.

2. Schrank (200) für optische Verteilerrahmen nach Anspruch 1, wobei ein Befestigungsschlitz (603) konkav an der Unterseite der Gleitnut (504) angeordnet ist und die Unterseite der Gleitnut (504) der Schranktür des Schranks (201) zugewandt angeordnet ist, sodass das Montageösen-Bauteil (505) in einer Führungsrichtung der Gleitnut (504) gleitet, wenn sich der optische Verteilerrahmen (203) in den Schrank (201) hinein dreht, und, wenn das Montageösen-Bauteil (505) in den Befestigungsschlitz (603) eingeführt ist und daran befestigt ist, das Montageösen-Bauteil (505) sich in Presspassung mit dem Befestigungsschlitz (603) befindet.

3. Schrank (200) für optische Verteilerrahmen nach einem der Ansprüche 1 oder 2, wobei der optische Verteilerrahmen (203) einen Befestigungsteil (301) und einen Drehteil (302) umfasst, die miteinander verbunden sind, wobei eine erste Seite des Befestigungsteils (301) fest mit dem Schrank (201) verbunden ist, eine Drehnut (303) konkav auf einer zweiten Seite des Befestigungsteils (301) angeordnet ist, eine Drehwelle (304) konvex an dem Drehteil (302) angeordnet ist und die Drehwelle (304) dazu konfiguriert ist, in die Drehnut (303) eingeführt zu werden und daran befestigt zu werden, sodass der Drehteil (302) dazu konfiguriert ist, sich um den Befestigungsteil (301) zu drehen, wobei die Drehwelle (304) als Mittelpunkt dient.

4. Schrank (200) für optische Verteilerrahmen nach Anspruch 3, wobei der Drehteil (302) einstückig angeordnet ist und der Drehteil (302) einen Ablagekörper (501) umfasst, der zum Befestigen einer Vielzahl von Zieleinheiten (701, 702) konfiguriert ist, wobei
mindestens eine der Zieleinheiten (701, 702) eine Faserspeichereinheit ist, die dazu konfiguriert ist, eine Glasfaser zu speichern, die in mindestens einen der optischen Verteilerrahmen eintritt oder aus diesem austritt; oder mindestens eine der Zieleinheiten (701, 702) eine Spleißeinheit (701) ist, die dazu konfiguriert ist, ein optisches Kabel, das in den optischen Verteilerrahmen (203) eintritt, und eine Glasfaser, die sich im Innern des optischen Verteilerrahmens (203) befindet, zu spleißen; oder
mindestens eine der Zieleinheiten (701, 702) eine optische Aufteilungseinheit (702) ist, die dazu konfiguriert ist, eine optische Aufteilung an der Glasfaser durchzuführen.

5. Schrank (200) für optische Verteilerrahmen nach Anspruch 4, wobei der Ablagekörper (501), der einstückig angeordnet ist, und die Vielzahl von Zieleinheiten (701, 702) alle aus einem makromolekularen Material hergestellt sind.

6. Schrank (200) für optische Verteilerrahmen nach Anspruch 4 oder 5, wobei der Drehteil (302) ferner eine Montagehalterung (801) umfasst, wobei eine Aufnahmenut zwischen einer ersten Endfläche der Montagehalterung (801) und dem Ablagekörper (501) gebildet ist; die Aufnahmenut zum Einführen und Befestigen der optischen Aufteilungseinheit (702) konfiguriert ist; mindestens eine Montagekerbe (805) an einer zweiten Endfläche der Montagehalterung (801) angeordnet ist; und die Montagekerbe (805) zum Einführen und Befestigen einer Endfläche der Spleißeinheit (701) konfiguriert ist, sodass die Spleißeinheit (701) in die zweite Endfläche der Montagehalterung (801) eingeführt ist und daran befestigt ist.

7. Schrank (200) für optische Verteilerrahmen nach Anspruch 6, wobei mindestens ein Begrenzungshaken (1101) in einer Position auf dem Ablagekörper (501) angeordnet ist, die der ersten Endfläche der Montagehalterung (801) zugewandt ist, und sich der Begrenzungshaken (1101) in einer ersten Richtung erstreckt; und mindestens ein Begrenzungsschlitz (807) an der ersten Endfläche der Montagehalterung (801) angeordnet ist und der Begrenzungsschlitz (807) und der Begrenzungshaken (1101) einander gegenüberliegend angeordnet sind; der Begrenzungshaken (1101) zum Einführen und Befestigen des Begrenzungsschlitzes (807) konfiguriert ist, der Begrenzungshaken (1101) dazu konfiguriert ist, eine Bewegung des Begrenzungsschlitzes (807) in einer zweiten Richtung zu begrenzen; und die zweite Richtung eine Richtung ist, die der Längsrichtung der optischen Verteilerrahmen (203) entgegengesetzt ist.

8. Schrank (200) für optische Verteilerrahmen nach einem der Ansprüche 1 bis 7, wobei ein Verbindungsteil (507) an dem Montageösen-Bauteil (505) angeordnet ist, sich ein erstes Gewindeloch (508) durch den Verbindungsteil (507) erstreckt, ein zweites Gewindeloch in dem Schrank (201) angeordnet ist und das erste Gewindeloch (508) und das zweite Gewindeloch einander gegenüberliegend angeordnet sind;
sich ein Gleitarm (509) von dem Verbindungsteil (507) in einer Richtung erstreckt, die der Gleitnut (504) zugewandt ist, wenn sich der optische Verteilerrahmen (203) in den Schrank (201) hinein dreht, und sich aus der Öffnung der Gleitnut (504) erstreckt; und eine Führungsschiene (510) konkav in der Führungsrichtung der Gleitnut (504) angeordnet ist und Formen des Gleitarms (509) und der Führungsschiene (510) zueinander passen, sodass, wenn der Gleitarm (509) in die Führungsschiene (510) eingeführt ist, der Gleitarm (509) in einer Führungsrichtung der Führungsschiene (510) gleitet.

## Revendications

1. Armoire de répartiteur optique (200), comprenant une armoire (201), dans laquelle une pluralité de répartiteurs optiques (203) sont disposés à l'intérieur de l'armoire (201) ; dans laquelle, pour chacun de la pluralité de répartiteurs optiques (203) :
une première extrémité du répartiteur optique (203) est conçue pour être articulée sur l'armoire (201) de sorte que le répartiteur optique (203) peut tourner dans ou hors de l'armoire (201), et
une rainure coulissante (504) est disposée sur une face d'extrémité d'une seconde extrémité du répartiteur optique (203) ;
la rainure coulissante (504) s'étend dans une direction longitudinale du répartiteur optique (203) ;
un composant d'oreille de montage (505) est disposé sur une face d'extrémité de l'armoire (201) et fixé à l'armoire (201), et le composant d'oreille de montage (505) est disposé de manière convexe face au répartiteur optique (203) lorsque le répartiteur optique (203) est pivoté hors de l'armoire (201) ; et
lorsque le répartiteur optique (203) tourne dans l'armoire (201), le composant d'oreille de montage (505) est inséré dans la rainure coulissante (504) et coulisse dans une direction de guidage de la rainure coulissante (504), jusqu'à ce que le répartiteur optique est inséré dans l'armoire (201),
**caractérisée en ce que**
une taille d'une ouverture de la rainure coulissante (504) augmente progressivement dans une direction s'éloignant d'une porte d'armoire de l'armoire (201)
un plan de coupe de la rainure coulissante (504) s'élargit dans une direction longitudinale du répartiteur optique, et une première encoche (601) et une seconde encoche (602) sont disposées de manière opposée au niveau de deux extrémités de la rainure coulissante d'élargissement (504) ; la première encoche (601) est disposée à proximité de la porte de l'armoire (201), la seconde encoche (602) est disposée à l'opposé de la porte d'armoire (201), et une zone de section transversale de la seconde encoche (602) est supérieure à celle de la première encoche (601) ; et lorsque le composant d'oreille de montage (505) est inséré dans la seconde encoche (602), un espace est formé entre le composant d'oreille de montage (505) et la seconde encoche (602).

2. Armoire de répartiteur optique (200) selon la revendication 1, dans laquelle une fente de fixation (603) est disposée de manière concave au fond de la rainure coulissante (504), et le fond de la rainure coulissante (504) est disposé face à la porte d'armoire de l'armoire (201), de sorte que le composant d'oreille de montage (505) glisse dans une direction de guidage de la rainure coulissante (504) lorsque le répartiteur optique (203) tourne dans l'armoire (201), et lorsque le composant d'oreille de montage (505) est inséré et fixé à la fente de fixation (603), le composant d'oreille de montage (505) est en ajustement serré avec la fente de fixation (603) .

3. Armoire de répartiteur optique (200) selon l'une quelconque des revendications 1 ou 2, dans laquelle le répartiteur optique (203) comprend une partie de fixation (301) et une partie rotative (302) qui sont reliées l'une à l'autre, dans laquelle un premier côté de la partie de fixation (301) est relié de manière fixe à l'armoire (201), une rainure rotative (303) est disposée de manière concave sur un second côté de la partie de fixation (301), un arbre rotatif (304) est disposé de manière convexe sur la partie rotative (302), et l'arbre rotatif (304) est conçu pour être inséré et fixé à la rainure rotative (303), de sorte que la partie rotative (302) est conçue pour tourner autour de la partie de fixation (301) avec l'arbre rotatif (304) comme centre.

4. Armoire de répartiteur optique (200) selon la revendication 3, dans laquelle la partie rotative (302) est disposée d'un seul tenant, et la partie rotative (302) comprend un corps de plateau (501) conçu pour fixer une pluralité d'unités cibles (701, 702), dans laquelle
au moins l'une des unités cibles (701, 702) est une unité de stockage de fibre conçue pour stocker une fibre optique entrant ou sortant d'au moins l'un des répartiteurs optiques ; ou
au moins l'une des unités cibles (701, 702) est une unité d'épissure (701) conçue pour épisser un câble optique entrant dans le répartiteur optique (203) et une fibre optique située à l'intérieur du répartiteur optique (203) ; ou
au moins l'une des unités cibles (701, 702) est une unité de division optique (702) conçue pour effectuer une division optique sur la fibre optique.

5. Armoire de répartiteur optique (200) selon la revendication 4, dans laquelle le corps de plateau (501) qui est disposé d'un seul tenant et la pluralité d'unités cibles (701, 702) sont tous constitués d'un matériau macromoléculaire.

6. Armoire de répartiteur optique (200) selon la revendication 4 ou 5, dans laquelle la partie rotative (302) comprend en outre un support de montage (801), dans laquelle une rainure de logement est formée entre une première face d'extrémité du support de montage (801) et le corps de plateau (501) ; la rainure de logement est conçue pour insérer et fixer l'unité de division optique (702) ; au moins une encoche de montage (805) est disposée sur une seconde face d'extrémité du support de montage (801) ; et l'encoche de montage (805) est conçue pour insérer et fixer une face d'extrémité de l'unité d'épissure (701), de sorte que l'unité d'épissure (701) est insérée et fixée à la seconde face d'extrémité du support de montage (801).

7. Armoire de répartiteur optique (200) selon la revendication 6, dans laquelle au moins un crochet de limitation (1101) est disposé dans une position, face à la première face d'extrémité du support de montage (801), sur le corps de plateau (501), et le crochet de limitation (1101) s'étend dans une première direction ; et au moins une fente de limitation (807) est disposée sur la première face d'extrémité du support de montage (801), et la fente de limitation (807) et le crochet de limitation (1101) sont disposés à l'opposé l'un de l'autre ; le crochet de limitation (1101) est conçu pour insérer et fixer la fente de limitation (807), le crochet de limitation (1101) est conçu pour limiter le mouvement de la fente de limitation (807) dans une seconde direction ; et la seconde direction est une direction opposée à la direction longitudinale des répartiteurs optiques (203).

8. Armoire de répartiteur optique (200) selon l'une quelconque des revendications 1 à 7, dans laquelle une partie de connexion (507) est disposée sur le composant d'oreille de montage (505), un premier trou fileté (508) s'étend à travers la partie de connexion (507), un second trou fileté est disposé dans l'armoire (201), et le premier trou fileté (508) et le second trou fileté sont disposés à l'opposé l'un de l'autre ;
un bras coulissant (509) s'étend depuis la partie de connexion (507) dans une direction faisant face à la rainure coulissante (504) lorsque le répartiteur optique (203) tourne dans l'armoire (201), et s'étend hors de l'ouverture de la rainure coulissante (504) ; et un rail de guidage (510) est disposé de manière concave dans la direction de guidage de la rainure coulissante (504), et les formes du bras coulissant (509) et du rail de guidage (510) correspondent l'une à l'autre, de sorte que, lorsque le bras coulissant (509) est inséré dans le rail de guidage (510), le bras coulissant (509) coulisse dans une direction de guidage du rail de guidage (510).
